# EUROPÄISCHE PATENTANMELDUNG

(11) **EP 4 285 712 A1**
(43) Veröffentlichungstag der Anmeldung: **06.12.2023**
(21) Anmeldenummer: 23175873.1
(22) Anmeldetag: 27.05.2023
(51) Int. Cl.: A01G 9/24, A01G 13/02

(54) **SYSTEM ZUR ÜBERDACHUNG VON PFLANZENKULTUREN**

(30) Priorität: 30.05.2022 DE 102022113611
(71) Anmelder: BayWa Aktiengesellschaft, 81925 München (DE)
(72) Erfinder: STRAUSS, Matthias, 88069 Tettnang (DE); HOLZWARTH, Rudolf, 88255 Baindt (DE); BERRETH, Klaus, 73479 Ellwangen (DE)
(74) Vertreter: Pfiz/Gauss Patentanwälte PartmbB

(57) **Zusammenfassung**

Die Erfindung betrifft ein System zur Überdachung von Pflanzenkulturen mit in einer Agrarfläche (16) rasterartig angeordneten, vom Boden (18) weg nach oben abstehenden Stützsäulen (20), zwischen den Stützsäulen (20) gespannten, als Draht oder Seil ausgebildeten Spannverbindern (28), und an den Spannverbindern (28) über den Pflanzenkulturen aufspannbaren, aus einem flexiblen Folien- und/oder Gewebematerial gebildeten Dachbahnen (34). Für einen erhöhten Nutzen wird vorgeschlagen, dass an zumindest einigen der Stützsäulen (20) ein Modulhalter (38) angebracht ist, und an jedem Modulhalter (38) mindestens ein mit Photozellen zur Stromerzeugung belegtes Photovoltaikmodul (36) oberhalb der Dachbahnen (34) gehalten ist.

## Beschreibung

Die Erfindung betrifft ein System zur Überdachung von Pflanzenkulturen mit in einer Agrarfläche rasterartig angeordneten, vom Boden weg nach oben abstehenden Stützsäulen, zwischen den Stützsäulen gespannten, als Draht oder Seil ausgebildeten Spannverbindern, und an den Spannverbindern über den Pflanzenkulturen aufspannbaren, aus einem flexiblen Folien- und/oder Gewebematerial gebildeten Dachbahnen.

Derartige Überdachungssysteme sind beispielsweise im Anbau von Kernobst bekannt, um hochwertige Ernteerträge möglichst frei von Witterungsschäden zu erzielen. Rasch zunehmend ergibt sich jedoch ein Bedarf für eine nachhaltige Landnutzung für die Gewinnung von erneuerbaren Energien und Nahrungsmitteln. In diesem Bereich der sogenannten Agri-Photovoltaik sind die bisherigen Lösungen eng am Stahlbau der Freiflächen- und Dachflächen-PV-Anlagen orientiert, während Aspekte hinsichtlich der Agrarnutzung häufig zurückstehen.

Ausgehend hiervon liegt der Erfindung die Aufgabe zugrunde, die im Stand der Technik bekannten Systeme weiter zu verbessern und eine optimierte Konstruktion für gleichzeitige Ernte von Lebensmitteln und Solarenergie anzugeben.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, statischen und lichtökonomischen Aspekten durch eine geeignete Trägerkonstruktion von PV-Modulen Rechnung zu tragen. Demzufolge wird erfindungsgemäß vorgeschlagen, dass an zumindest einigen der Stützsäulen an deren oberem Säulenende ein Modulhalter angebracht ist, und dass an jedem Modulhalter mindestens ein mit Photozellen zur Stromerzeugung belegtes Photovoltaikmodul oberhalb der Dachbahnen gehalten ist. Auf diese Weise kommt den Säulen ein Doppelnutzen hinsichtlich einer Trägerfunktion für die Dachbahnen und die Photovoltaikmodule zu, wobei die Photovoltaikmodule topographieunabhängig positioniert und im Hinblick auf Material- und Montageaufwand sehr ressourcenschonend aufgebaut werden können, und wobei sich durch das rasterartige Modulfeld noch genügend Freiraum für einen hinreichenden Lichteinfall in der Agrarfläche ergibt.

Vorteilhafterweise umfasst der Modulhalter einen mit dem Säulenende form-, kraft- und/oder stoffschlüssig verbundenen, insbesondere rohrförmigen Säulenadapter. Auf diese Weise ist es möglich, die Säulen wahlweise und montagetechnisch einfach mit Photovoltaikmodulen auszustatten.

Eine weitere Vorteilhafte Ausgestaltung sieht vor, dass der Modulhalter einen das Photovoltaikmodul vorzugsweise über eine Schienenkonstruktion rückseitig abstützenden Moduladapter umfasst. Durch die zweigeteilte Konstruktion des Modulhalters wird die Vormontage und der Aufbau vor Ort wesentlich vereinfacht.

Um die Sonnenausrichtung zu optimieren, ist es vorteilhaft, wenn der Moduladapter mindestens ein insbesondere aus Blechmaterial gebildetes Schwenkelement oder ein beidseitig abgewinkeltes Kantblech zur Neigungseinstellung in vorgesehenen Winkelpositionen bezüglich der Vertikalen aufweist.

Eine weitere Verbesserung in dieser Hinsicht lässt sich dadurch erreichen, dass der Moduladapter ein Bohrungsmuster zur richtungsvariablen Schraubfixierung aufweist.

Zur Vermeidung von Überbeanspruchungen ist es von Vorteil, wenn die Neigung der Photovoltaikmodule durch eine insbesondere unter Last durch Witterungseinflüsse auslösbare Kippmechanik oder durch ein elektronisches Antriebsmodul verstellbar ist.

In diesem Zusammenhang ist es auch günstig, wenn die Kippmechanik ein Rückstellelement zur Neigungsrückstellung der Photovoltaikmodule in ihre Ausgangslage aufweist.

Für eine vereinfachte Abspannung ist es vorteilhaft, wenn der Modulhalter eine ggf. mit einer Klemme versehene Durchführung für mindestens einen Spannverbinder aufweist.

Eine weitere Verbesserung der Abspannung kann sich dadurch ergeben, dass der Modulhalter über ein winklig von einem Spannverbinder weggeführtes Kopfseil bzw. einen Kopfdraht abgespannt ist.

Vorteilhafterweise bestehen die Stützsäulen aus Holz, Beton oder Metall.

Eine in allen Richtungen belastbare Konstruktion lässt sich dadurch erreichen, dass die Spannverbinder durch in Längsrichtung von zu überdachenden Pflanzenreihen verlaufende Firstverbinder und quer bzw. diagonal dazu verlaufende Querverbinder gebildet sind, wobei sich die First- und Querverbinder an den Stützsäulen kreuzen.

Vorteilhafterweise sind die Dachbahnen in Längsrichtung von zu überdachenden Pflanzenreihen durchgehend aufgespannt. Zugleich können die Dachbahnen an ihren Längsrändern paarweise miteinander verbunden sein, so dass eine vollflächige Überdachung bzw. ein vollflächiger Schutz der Agrarfläche erreicht wird.

Eine weitere Sicherung der Stützsäulen gegen Umkippen sieht vor, dass die Spannverbinder an mindestens einem Ende über Erdanker im Boden verankert sind.

Um die Ausbeute zu verbessern und Aufwand zu reduzieren, ist es vorteilhaft, wenn mehr als ein Photovoltaikmodul, insbesondere zwei oder vier Photovoltaikmodule jeweils an einer Stützsäule gehalten sind.

Eine weitere vorteilhafte Ausführung sieht vor, dass mehrere Photovoltaikmodule in horizontaler oder gleichsinnig geneigter oder paarweise dachförmiger Stellung jeweils an einer Stützsäule starr oder abkippbar gehalten sind.

Im Folgenden wird die Erfindung anhand der in der Zeichnung in schematischer Weise dargestellten Ausführungsbeispiele näher erläutert. Es zeigen:
- Fig. 1: ein System zur Überdachung von Pflanzenkulturen mit Dachbahnen und Photovoltaikmodulen in schaubildlicher Darstellung;
- Fig. 2: eine Seitenansicht des Überdachungssystems;
- Fig. 3: einen Säulenadapter zur Montage am oberen Säulenende von Stützsäulen des Überdachungssystems in einer 3D-Darstellung;
- Fig. 4: den Säulenadapter nach Fig. 3 in Draufsicht;
- Fig. 5: einen Modulhalter mit einem darauf montierten Photovoltaikmodul in einer 3D-Ansicht von schräg unten;
- Fig. 6: eine alternative Halterung für zwei Photovoltaikmodule in einer 3D-Ansicht von schräg unten;
- Fig. 7 und 8: eine weitere Halterung für zwei Photovoltaikmodule in einer 3D-Ansicht von oben und unten;
- Fig. 8: eine weitere Anordnung von Photovoltaikmodulen auf reihenförmig angeordneten Stützsäulen in schaubildlicher Darstellung.

Das in der Zeichnung dargestellte Überdachungssystem 10 ermöglicht die Überdachung von nicht gezeigten Pflanzenkulturen, beispielsweise Obstplantagen, mit einem vollflächigen Wetterschutzgebilde 12 in Kombination mit einer Photovoltaikanlage 14 zur Stromerzeugung. Dies erlaubt eine sowohl landwirtschaftliche als auch energetische Nutzung ein und derselben Agrarfläche 16.

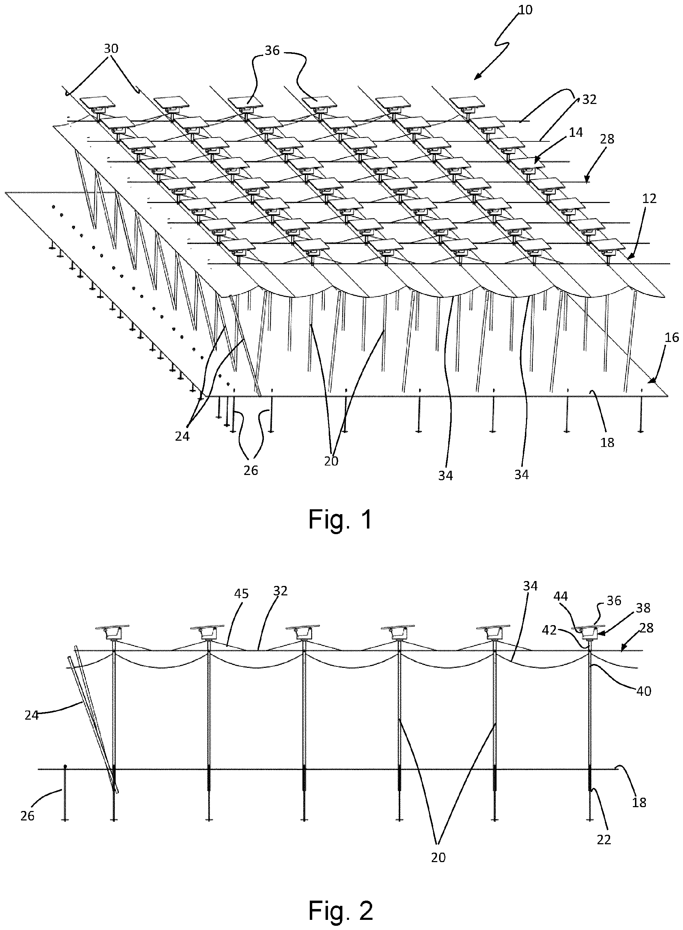

Wie am besten in Fig. 1 ersichtlich, umfasst das Überdachungssystem 10 eine Vielzahl von in parallelen Reihen im Abstand voneinander angeordneten, vom Erdboden 18 weg nach oben abstehenden Stützsäulen 20. Diese können beispielsweise als Beton-, Holz- oder Metallpfosten ausgebildet sein und mit ihrem unteren Ende 22 im Erdboden 18 eingesetzt sein. Die Höhe der Stützsäulen 20 kann beispielsweise zwischen 3m und 6m betragen. Ergänzend sorgen schräg gestellte Schrägpfosten 24 an den Reihenenden für eine günstige Kraftableitung zu Erdankern 26 in Verbindung mit nachstehend erläuterten Spannverbindern 28.

Die Spannverbinder 28 können als Draht oder mehrlitziges Seil ausgebildet sein und durch in Längsrichtung von zu überdachenden Pflanzenreihen verlaufende Firstverbinder 30 und quer bzw. diagonal dazu verlaufende Querverbinder 32 gebildet sein, wobei sich die First- und Querverbinder 30, 32 an den Stützsäulen 20 kreuzen.

Die eigentliche Wetterschutzfunktion beispielsweise gegen Hagel, starken Regen oder Frost wird durch Dachbahnen 34 erreicht, die aus einem flexiblen Folien- bzw. Gewebematerial gebildet sind und dachartig über den Pflanzenkulturen aufspannbar sind. In der gezeigten Ausführungsform sind die Dachbahnen 34 längs der linearen Firstverbinder 30 in einer giebelartigen Konfiguration aufgespannt und an ihren traufseitigen Längsrändern über den Arbeitsgassen zwischen den Pflanzenkulturen miteinander verbunden. Denkbar sind aber auch insgesamt flache und ggf. überlappende Anordnungen von Dachbahnen.

Die Photovoltaikanlage 14 umfasst eine Vielzahl von Photovoltaikmodulen 36, die an jeweils an einer Stützsäule 20 an deren oberem Säulenende angebracht sind. Die im Umriss rechteckigen Photovoltaikmodule 36 sind in an sich bekannter Weise mit Photozellen zur Stromerzeugung belegt und über nicht eigens gezeigte elektrische Leitungen miteinander verschaltet.

Wie auch aus der Seitenansicht in Firstrichtung nach Fig. 2 ersichtlich, sind die Photovoltaikmodule 36 oberhalb der Dachbahnen 34 in einer gewünschten Ausrichtung gehalten. Zu diesem Zweck ist für jedes Photovoltaikmodul 36 ein Modulhalter 38 vorgesehen, der eine Abstützung auf dem oberen Säulenende 40 ermöglicht und zugleich die Spannverbinder 28 führt. Die Modulhalter 38 sind in einer zweiteiligen Konstruktion aus einem Säulenadapter 42 und einem damit verbindbaren Moduladapter 44 ausgeführt.

Um eine zusätzliche Quersicherung zu ermöglichen, können die Modulhalter 38 über ein Kopfseil bzw. einen Kopfdraht 45 abgespannt sein. Dieser verläuft in einer dreieckförmigen Konfiguration winklig von dem Querverbinder 32 nach oben weg.

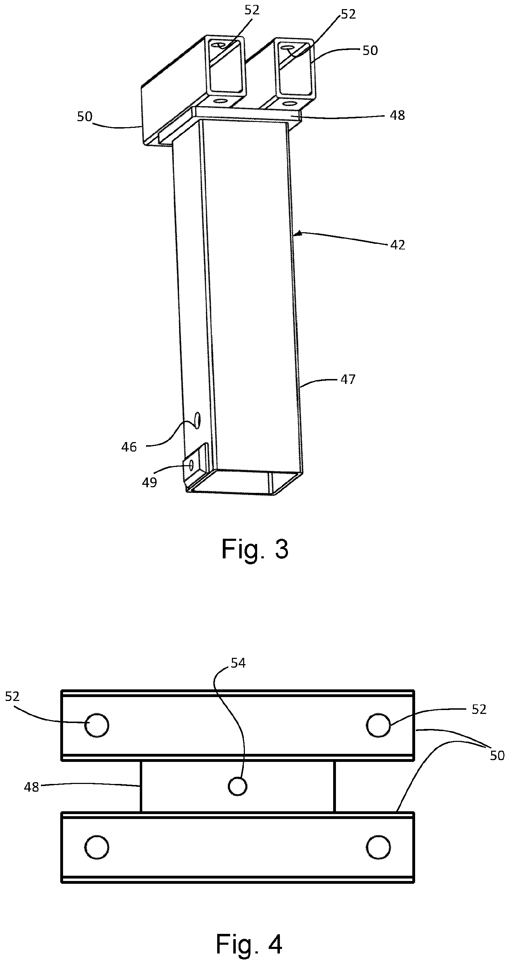

Der in Fig. 3 gezeigte Säulenadapter 42 ist über ein vierkantiges Rohrteil 47 formschlüssig auf eine komplementär geformte Stützsäule 20 aufsteckbar. Denkbar ist auch eine kraftschlüssige Verbindung beispielsweise durch Schrauben bzw. eine stoffschlüssige Verbindung beispielsweise durch Schweißen oder Kleben.

Die Durchführung des Firstverbinders 30 ist über eine Wandbohrung 46 des Rohrteils 47 und eine korrespondierende Querbohrung der zugeordneten Stützsäule 20 möglich. Um den jeweiligen Querverbinder 32 tangential an der Stützsäule 20 bohrungsfrei zu halten, ist am unteren Ende des Rohrteils 44 eine Seilklemme 49 seitlich angebracht.

Wie auch aus Fig. 4 ersichtlich, sind an einer oberen Kopfplatte 48 des Säulenadapters 42 zwei parallel zueinander horizontal verlaufende, als Hohlprofile ausgebildete Distanzstücke 50 befestigt, die eine Basis zur Abstützung des Moduladapters 44 bilden. Zu diesem Zweck sind die Distanzstücke 50 mit Vertikalbohrungen 52 für nicht gezeigte Durchsteckschrauben versehen. Eine weitere Schraubbohrung 54 in der Kopfplatte 48 erlaubt die Fixierung eines Klemmteils für den Kopfdraht 45.

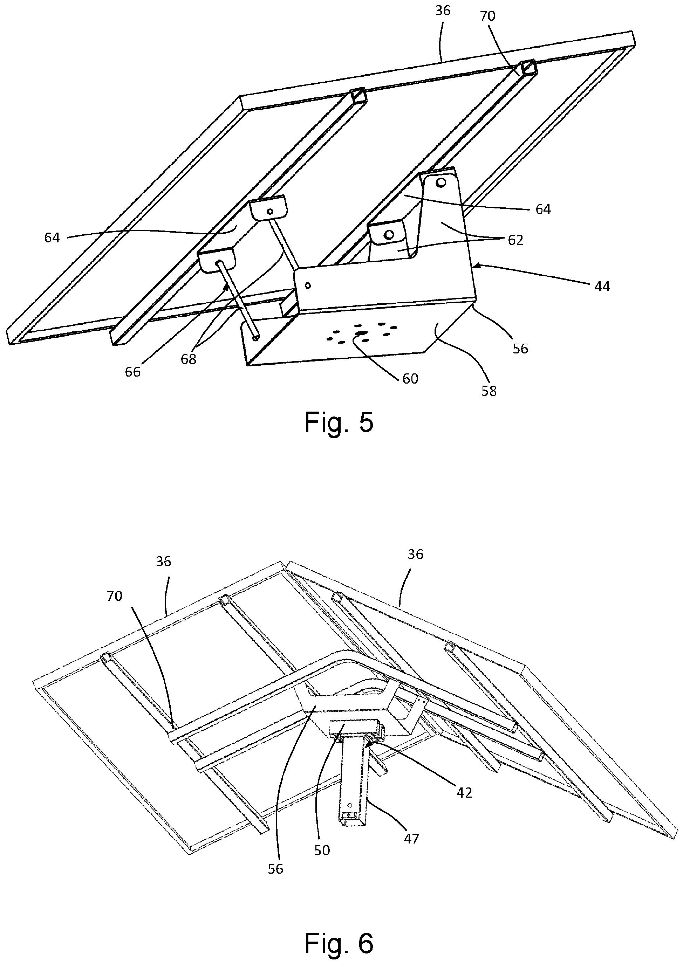

Fig. 5 veranschaulicht eine Ausführung des Moduladapters 44. Dieser umfasst ein Basisteil 56, das aus einem abgekanteten Blechzuschnitt gebildet ist und an seinem Boden 58 ein Lochmuster 60 besitzt. Dieses Lochmuster 60 ermöglicht eine Schraubverbindung in einer gewünschten Horizontalwinkelorientierung mit den Vertikalbohrungen 52 der Distanzstücke 50.

Das Basisteil 56 weist ferner nach oben abgekantete Seitenlaschen 62 auf, zwischen denen ein Schwenkblech 64 drehbeweglich gelagert ist. Ein davon beabstandetes weiteres Schwenkblech 64 ist über eine Kippmechanik 66 an dem Basisteil 56 abgestützt. Die Kippmechanik 66 kann zwei parallele Gasdruckfedern 68 aufweisen, die beispielsweise unter Schneelast des abgestützten Photovoltaikmoduls 36 komprimierbar sind. Auf diese Weise ist eine selbsttätige Lastableitung durch Neigungsveränderung möglich. Denkbar ist auch eine gesteuerte Neigungseinstellung über einen elektronischen Antrieb anstelle einer Kippmechanik.

Die Schwenkbleche 64 erlauben eine Einstellung des Höhen- bzw. Neigungswinkels des Photovoltaikmoduls 36 bezüglich der Vertikalen. Um eine großflächige Aufspannung zu erreichen, ist eine Schienenkonstruktion 70 zwischen den Schwenkblechen 64 und der Rückseite des Photovoltaikmoduls 36 vorgesehen.

Fig. 6 zeigt eine weitere Ausführungsform, bei welcher gleiche oder ähnliche Teile mit denselben Bezugszeichen wie vorstehend beschrieben versehen sind. Der Unterschied besteht im Wesentlichen darin, dass zwei winklig zueinander angestellte Photovoltaikmodule 36 in vorgegebener Neigungseinstellung fest gehalten sind. In dieser einfachen Ausführung sind keine Schwenkbleche vorgesehen.

Grundsätzlich ist eine solche starre Anordnung auch mit nur einem Photovoltaikmodul 36 oder mehr als zwei Photovoltaikmodulen 36 möglich.

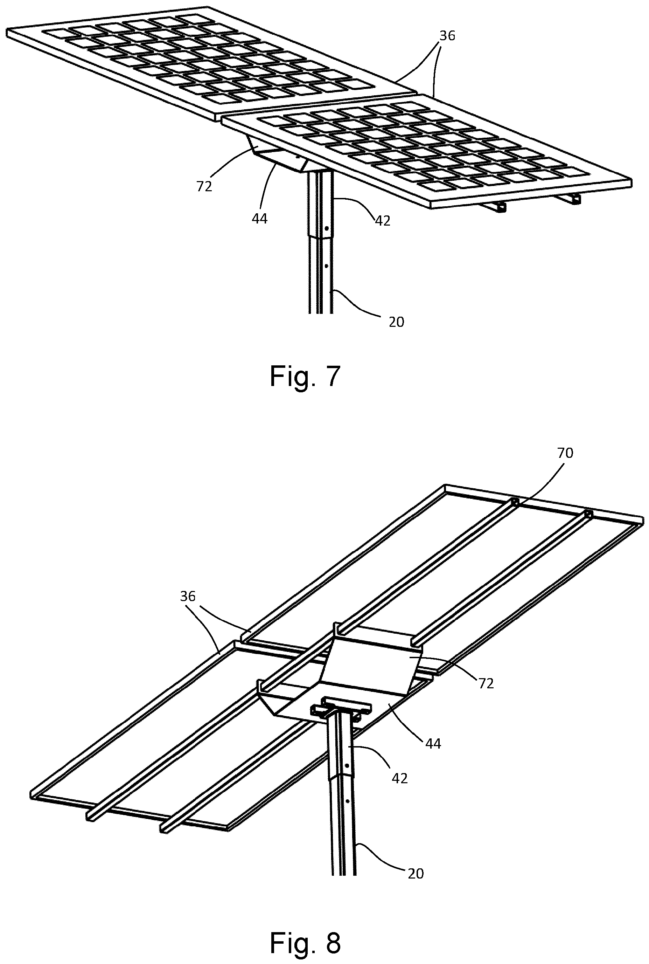

Wie in Fig. 7 und 8 gezeigt, können zwei Photovoltaikmodule 36 in einer besonders einfachen Konstruktion in einer gewünschten Schrägstellung fest gehalten werden. Zu diesem Zweck umfasst der Moduladapter 44 ein mit unterschiedlich breiten Stegen U-förmig nach oben abgewinkeltes Halteblech 72, das auf dem Säulenadapter 42 angeschraubt ist und an seinen Oberkanten mit Ausschnitten für die Schienenkonstruktion 70 versehen ist. Auf diese Weise lässt sich ein geeigneter Neigungswinkel für eine optimierte Sonneneinstrahlung und für die Ableitung von Niederschlägen fest vorgeben.

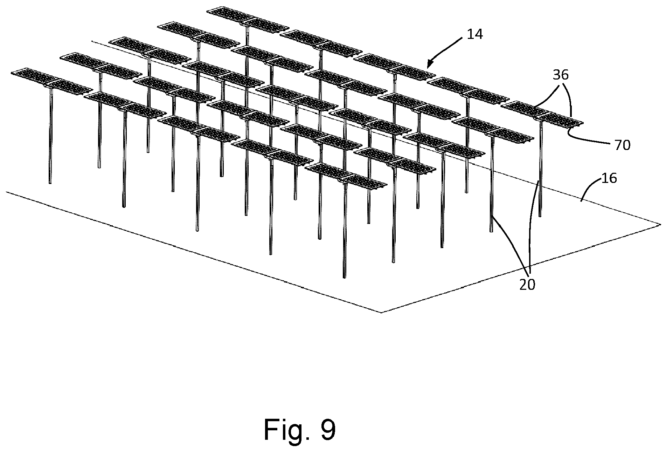

Das in Fig. 9 zur Vereinfachung ohne Wetterschutzgebilde 12 gezeigte Ausführungsbeispiel umfasst eine Photovoltaikanlage 14 mit paarweise an einer jeweiligen Stützsäule 20 in T-förmiger Anordnung an einer Schienenkonstruktion 70 gehaltenen Photovoltaikmodulen 36. Diese sind erstrecken sich hintereinander liegend bevorzugt in Richtung der Pflanzenreihen, so dass die Aufspannung von Dachbahnen nicht beeinträchtigt wird.

Es versteht sich, dass anstelle einer horizontalen Ausrichtung der Photovoltaikmodule 36 auch ein geneigter Aufbau möglich ist, und dass auch mehr als zwei, beispielsweise vier Photovoltaikmodule 36 gemeinsam an einer Stützsäule 20 gehaltert werden können.

## Patentansprüche

1. System zur Überdachung von Pflanzenkulturen mit
a) in einer Agrarfläche (16) rasterartig angeordneten, vom Boden (18) weg nach oben abstehenden Stützsäulen (20),
b) zwischen den Stützsäulen (20) gespannten, als Draht oder Seil ausgebildeten Spannverbindern (28), und
c) an den Spannverbindern (28) über den Pflanzenkulturen aufspannbaren, aus einem flexiblen Folien- und/oder Gewebematerial gebildeten Dachbahnen (34),
**dadurch gekennzeichnet, dass**
d) an zumindest einigen der Stützsäulen (20) an deren oberem Säulenende ein Modulhalter (38) angebracht ist, und
e) an jedem Modulhalter (38) mindestens ein mit Photozellen zur Stromerzeugung belegtes Photovoltaikmodul (36) oberhalb der Dachbahnen (34) gehalten ist.

2. System nach Anspruch 1, **dadurch gekennzeichnet, dass** der Modulhalter (38) einen mit dem Säulenende form-, kraft- und/oder stoffschlüssig verbundenen, insbesondere rohrförmigen Säulenadapter (42) umfasst.

3. System nach Anspruch 1 oder 2, **dadurch gekennzeichnet, dass** der Modulhalter (38) einen das Photovoltaikmodul (36) vorzugsweise über eine Schienenkonstruktion rückseitig abstützenden Moduladapter (44) umfasst.

4. System nach Anspruch 3, **dadurch gekennzeichnet, dass** der Moduladapter (44) mindestens ein Schwenkelement (64) oder ein beidseitig abgewinkeltes Kantblech (72) zur Neigungseinstellung in vorgesehenen Winkelpositionen bezüglich der Vertikalen aufweist.

5. System nach Anspruch 3 oder 4, **dadurch gekennzeichnet, dass** der Moduladapter (44) ein Bohrungsmuster (60) zur richtungsvariablen Schraubfixierung aufweist.

6. System nach einem der Ansprüche 1 bis 5, **dadurch gekennzeichnet, dass** die Neigung der Photovoltaikmodule (36) durch eine insbesondere unter Last durch Witterungseinflüsse auslösbare Kippmechanik (66) oder durch ein elektronisches Antriebsmodul verstellbar ist.

7. System nach Anspruch 6, **dadurch gekennzeichnet, dass** die Kippmechanik (66) ein Rückstellelement (68) zur Neigungsrückstellung der Photovoltaikmodule (36) in ihre Ausgangslage aufweist.

8. System nach einem der Ansprüche 1 bis 7, **dadurch gekennzeichnet, dass** der Modulhalter (38) eine ggf. mit einer Klemme versehene Durchführung (46,49) für mindestens einen Spannverbinder (28) aufweist.

9. System nach einem der Ansprüche 1 bis 8, **dadurch gekennzeichnet, dass** der Modulhalter (38) über ein winklig von einem Spannverbinder (28) weggeführtes Kopfseil bzw. einen Kopfdraht (45) abgespannt ist.

10. System einem der Ansprüche 1 bis 9, **dadurch gekennzeichnet, dass** die Stützsäulen (20) aus Holz, Beton oder Metall bestehen.

11. System einem der Ansprüche 1 bis 10, **dadurch gekennzeichnet, dass** die Spannverbinder (28) durch in Längsrichtung von zu überdachenden Pflanzenreihen verlaufende Firstverbinder (30) und quer bzw. diagonal dazu verlaufende Querverbinder (32) gebildet sind, wobei sich die First- und Querverbinder (30,32) an den Stützsäulen (20) kreuzen.

12. System einem der Ansprüche 1 bis 11, **dadurch gekennzeichnet, dass** die Dachbahnen (34) in Längsrichtung von zu überdachenden Pflanzenreihen durchgehend aufgespannt sind.

13. System einem der Ansprüche 1 bis 12, **dadurch gekennzeichnet, dass** die Spannverbinder (28) an mindestens einem Ende über Erdanker (26) im Boden (18) verankert sind.

14. System einem der Ansprüche 1 bis 13, **dadurch gekennzeichnet, dass** mehr als ein Photovoltaikmodul (36), insbesondere zwei oder vier Photovoltaikmodule (36) jeweils an einer Stützsäule (20) gehalten sind.

15. System einem der Ansprüche 1 bis 14, **dadurch gekennzeichnet, dass** mehrere Photovoltaikmodule (36) in horizontaler oder gleichsinnig geneigter oder paarweise dachförmiger Stellung jeweils an einer Stützsäule starr oder abkippbar gehalten sind.
